(19) Europäisches Patentamt
European Patent Office
Office européen des brevets

(11) Veröffentlichungsnummer: **0 031 938**
**B1**

(12) # EUROPÄISCHE PATENTSCHRIFT

(45) Veröffentlichungstag der Patentschrift: **27.03.85**

(51) Int. Cl.⁴: **A 01 N 25/32**, A 01 N 39/00, A 01 N 41/02, A 01 N 41/10, A 01 N 47/24, A 01 N 57/14

(21) Anmeldenummer: **80108076.3**

(22) Anmeldetag: **20.12.80**

(54) **Verwendung von Aryloxy(thio)carbonsäurenitrilen und-amidoximen als Herbizid-Antidote.**

(30) Priorität: **03.01.80 DE 3000076**

(43) Veröffentlichungstag der Anmeldung: **15.07.81 Patentblatt 81/28**

(45) Bekanntmachung des Hinweises auf die Patenterteilung: **27.03.85 Patentblatt 85/13**

(84) Benannte Vertragsstaaten: **AT BE CH DE FR GB IT LI NL**

(56) Entgegenhaltungen:
**EP-A-0 012 717**
**US-A-3 547 621**
**US-A-4 030 911**

**CHEMICAL ABSTRACTS, Band 41, Nr. 12, 20. Juni 1947, Spalten 3902-3912, Columbus, Ohio, US, H.E. THOMPSON et al.: "New growth regulating compounds. I. Summary of growth-inhibitory activities of some organic compounds as determined by three tests"**
**CENTRAL PATENTS INDEX, Basic Abstracts Journal, Agdoc, Week T39, 1972, 62487T, Derwent, London, GB**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Heier, Karl Heinz, Dr., Mailänder Strasse 19, D-6000 Frankfurt am Main 70 (DE)**
Erfinder: **Nestler, Hans Jürgen, Dr., Steinweg 15, D-6240 Königstein/Taunus (DE)**
Erfinder: **Bieringer, Hermann, Dr., Eichenweg 26, D-6239 Eppstein/Taunus (DE)**
Erfinder: **Bauer, Klaus, Dr., Kolpingstrasse 7, D-6054 Rodgau (DE)**

**EP 0 031 938 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft die Verwendung von Verbindungen der Formel I,

$$Ar-X-C_nH_{2n}-R \qquad (I)$$

worin

Ar = Phenyl, das ein- bis dreifach durch Chlor oder Brom und/oder einfach durch Methyl substituiert sein kann, oder Naphthyl.
X = Sauerstoff oder Schwefel.
R = CN oder $C(NH_2)NOH$ und
n = 1 oder 2

bedeuten, als phytotoxizitätsmindernde Zusätze zu Herbiziden vom Typ der Phenoxy, Pyridiloxy, Benzoxazolyloxy- und Benzthiazolyloxy-phenoxycarbonsäureester bzw. der Chloracetanilide oder der Dimedon-Derivate.

Bevorzugt sind diejenigen Verbindungen der Formel I, in denen

Ar = Phenyl, das ein bis dreifach durch Chlor substituiert ist,
X = Sauerstoff,
R = CN und
n = 1

bedeuten.

Als bevorzugte Einzelverbindungen der Formel I seien beispielsweise genannt:

4-Chlorphenoxyacetonitril und -acetamidoxim,
α-(4-Chlorphenoxy)propionitril und -propionamidoxim,
2,4-Dichlorphenoxyacetonitril und -acetamidoxim,
3,4-Dichlorphenoxyacetonitril und -acetamidoxim,
4-Brom-2-chlorphenoxyacetonitril und -acetamidoxim,
2,4,5-Trichlorphenoxyacetamidoxim,
α-(4-Brom-2-Chlor)phenoxypropionitril und propionamidoxim,
4-Chlor-2-methyl-phenoxyacetonitril und -acetamidoxim,
2-Chlor-4-methylphenoxyacetonitril und -acetamidoxim,
2,3-Dichlorphenoxyacetonitril und -acetamidoxim,
2-Naphthyloxy-acetonitril und -acetamidoxim,
α-(2,4-Dichlorphenoxy)-propionitril und -propionamidoxim,
4-Chlor-phenylthioacetonitril und -acetamidoxim,
3,4-Dichlor-phenylthio-acetonitril und -acetamidoxim.

Die Verbindungen der Formel I sind als solche weitgehend bekannt und können nach gleichfalls bekannten Verfahren bzw. analog diesen Verfahren hergestellt werden [J. Am. Chem. Soc. 69, 1690 (1947); Rocz. Chem. 45, 345 (1971); US-PS 3 139 455; US-PS 3 547 621; US-PS 3 644 523; FR-PS 1 572 961; JP-PS 42-9944; JP-PS 7 237 540]. Einige von ihnen sind bereits für herbizide Zwecke vorgeschlagen worden oder sind als pflanzenwachstumsfördernde Mittel bekannt (s. z. B. Chem. Abstr. 41 3902—3912 (1947) oder Central Patents Index, Basic Abstr. J., Agdoc (1972), 62487 T, Derwent London.

Überraschenderweise zeigte es sich, daß die Verbindungen der Formel I bereits in niedrigen Dosierungen Antidot-Wirkungen gegenüber Herbiziden besitzen.

Die Verbindungen der Formel I können somit vorteilhaft zum Schutz von Kulturpflanzen gegen phytotoxische Nebenwirkungen von Herbiziden beim selektiven Einsatz in Nutzpflanzenkulturen eingesetzt werden. Hierdurch kann das Einsatzgebiet herkömmlicher Pflanzenschutzmittel ganz erheblich vergrößert werden. Verbindungen, die die Eigenschaft besitzen, Kulturpflanzen gegen phytotoxische Schäden durch Pflanzenschutzmittel zu schützen ohne die pestizide Wirkung dieser Mittel zu beeinträchtigen, werden Antidote oder Safener genannt.

Herbizid-Antidote sind bisher nur durch wenige Beispiele wie N,N-Diallyl-2,2-dichloracetamid [Can. J. Pl. Sci. 52, 707 (1972); DE-PS 2 218 097], Naphthalsäureanhydrid [Weed. Sci. 19, 565 (1971); US-PS 3 131 509] sowie einige Oximether und -Ester [DE-OS 2 808 317] und Arylthioether [US-PS 4 030 911], insbesondere in Verbindung mit Thiocarbamat-Herbiziden, bekannt [s. hierzu auch F. M. Pallos und J. E. Cassida, »Chemistry and Action of Herbicide Antidots«, Academic Press, New York/London, 1978]. Von den eingangs genannten Herbizid-Klassen, die in Kombination mit den erfindungsgemäßen Antidot-Verbindungen eingesetzt werden können, seien beispielsweise, ohne daß dadurch eine Beschränkung erfolgen soll, folgende Herbizide genannt:

Herbizide vom Typ der Phenoxycarbonsäureester wie etwa

α-[4-(2,4-Dichlorphenoxy)-phenoxy]-propionsäuremethylester,
α-[4-(4-Brom-2-chlorphenoxy)-phenoxy]-propionsäuremethylester,
α-[4-Trifluormethylphenoxy]-phenoxy]-propionsäuremethylester,
α-[4-(2-Chlor-4-trifluormethylphenoxy)-phenoxy]-propionsäuremethylester,
α-[4-(2,4-Dichlorbenzyl)-phenoxy]-propionsäuremethylester,
γ-[4-(4-Trifluormethylphenoxy)-phenoxy]-2-penten-1-carbonsäureäthylester,
α-[4-(3,5-Dichlorpyridyl-2-oxy)-phenoxy]-propionsäureäthylester,
α-[4-(6-Chlorbenzoxazol-2-yl-oxy)-phenoxy]-propionsäureäthylester oder
α-[4-(6-Chlorbenzthiazol-2-yl-oxy)-phenoxy/propionsäuremethylester

Chloracetanilid-Herbizide wie etwa

N-Methoxymethyl-2,6-diäthyl-chloracetanilid,
N-[3'-Methoxyprop-(2')-yl]-2-methyl-6-äthyl-chloracetatanilid,
N-(3-Methyl-1,2,4-oxdiazol-5-ylmethyl)-chloressigsäure-2,6-dimehtylanilid.

Thiolcarbonate wie etwa

S-Äthyl-N,N-dipropylthiocarbamat oder
S-Äthyl-N,N-diisobutylthiocarbamat

Dimedon-Derivate wie etwa

2-(N-Äthoxybutyrimidoyl)-5-(2-äthylthiopropyl)-3-hydroxy-2-cyclohexen-1-on oder
2-(1-Allyloxyiminobutyl)-4-methoxycarbonyl-5,5-dimethyl-3-oxocyclohexenol

Für die Anwendung können die Verbindungen der Formel I mit üblichen Formulierungshilfsmitteln zu Stäubemitteln, Spritzpulvern, Dispersionen, Emulsionskonzentraten usw. zubereitet werden, die den Wirkstoff in Konzentrationen von 2—80% enthalten und entweder als solche angewendet werden (Stäubemittel, Pellets) oder vor der Anwendung in einem Lösungsmittel (Wasser) gelöst oder dispergiert werden.

Das Mengenverhältnis Antidot: Wirkstoff kann innerhalb weiter Grenzen zwischen 0,01 und 10 Teilen Antidot auf 1 Teil Herbizid schwanken. Die jeweils optimalen Mengen an Herbizid und Antidot sind abhängig vom Typ des verwendeten Herbizids bzw. Antidots sowie von der Art des zu behandelnden Pflanzenbestandes und lassen sich von Fall zu Fall durch entsprechende Versuche ermitteln.

Als Haupteinsatzgebiete für die erfindungsgemäßen Mittel kommen vor allem Kulturen von Getreide (Weizen, Roggen, Gerste, Hafer), Reis, Mais, Sorghum, aber auch Baumwolle, Zuckerrüben, Zukkerrohr, Sojabohne und andere in Frage.

Die erfindungsgemäßen Mittel können je nach ihren Eigenschaften zur Vorbehandlung des Saatgutes der Kulturpflanze (Beizung der Samen oder der Stecklinge) oder vor der Saat in die Saatfurchen oder als Tankmischung vor oder nach dem Auflaufen der Pflanzen verwendet werden. Vorlaufbehandlung schließt sowohl die Behandlung der Anbaufläche vor der Aussaat als auch die Behandlung der angesäten, aber noch nicht bewachsenen Anbaufläche ein. Grundsätzlich kann das Antidot vor, nach oder gleichzeitig mit einem Herbizid angewendet werden, bevorzugt ist jedoch die gleichzeitige Anwendung in Form von Tankmischungen oder gegebenenfalls Fertigformulierungen.

Gegenstand der vorliegenden Erfindung ist daher auch ein Verfahren zum Schutz von Kulturpflanzen gegen phy totoxische Nebenwirkungen der genannten Pflanzenschutzmittel, dadurch gekennzeichnet, daß man die Pflanzen, Pflanzenteile oder Pflanzennährböden mit einer Verbindung der obengenannten Formel I vor, nach oder gleichzeitig mit dem Pflanzenschutzmittel behandelt. Folgende Beispiele dienen zur Erläuterung der Erfindung.

## Beispiel 1

Unter Freilandbedingungen wurden Gerste und Flughafer in Töpfen bis zum 4-Blatt-Stadium herangezogen und sodann mit einem Versuchsherbizid und einem erfindungsgemäßen Antidot behandelt. Die Wirkstoffe wurden jeweils in Form von wäßrigen Emulsionen bzw. Suspensionen, die aus formulierten Emulsionskonzentraten bzw. Spritzpulvern hergestellt worden waren, sowohl für sich allein als gemeinsam auf die Versuchspflanze appliziert. Nach der Behandlung wurden die Pflanzen unter guten Wachstumsbedingungen (18—23° C, normale Bewässerung) gehalten und 3 Wochen später wurde die Wachstumsbeeinflußung bonitiert, indem die Pflanzenschäden prozentual geschätzt wurden. Die Ergebnisse (s. Tabelle 1) verdeutlichen, daß die Gerste durch das Antidot vor Schädigung durch das Herbizid geschützt wird, ohne daß die Wirksamkeit des Herbizids gegen Flughafer beeinträchtigt wird.

Tabelle 1

Wirksamkeit der Verbindungen (Schadwirkung in %)

| Verbindung | Dosis, kg AS/ha | Gerste | Flughafer |
|---|---|---|---|
| $H_1$ | 1 | 0 | 93 |
| | 2 | 12 | 100 |
| | 4 | 28 | 100 |
| $A_1$ | 0,5 | 0 | 0 |
| $H_1 + A_1$ | 1 + 0,5 | 0 | 95 |
| | 2 + 0,5 | 0 | 100 |
| | 4 + 0,5 | 0 | 100 |
| $A_2$ | 0,5 | 0 | 0 |
| $H_1 + A_2$ | 1 + 0,5 | 0 | 93 |
| | 2 + 0,5 | 0 | 100 |
| | 4 + 0,5 | 0 | 100 |
| $A_3$ | 0,5 | 0 | 0 |
| $H_1 + A_3$ | 1 + 0,5 | 0 | 90 |
| | 2 + 0,5 | 0 | 100 |
| | 4 + 0,5 | 0 | 100 |
| $A_4$ | 0,5 | 0 | 0 |
| $H_1 + A_4$ | 1 + 0,5 | 0 | 93 |
| | 2 + 0,5 | 0 | 100 |
| | 4 + 0,5 | 2,0 | 100 |

H = Herbizid
A = Antidot

$H_1$ =

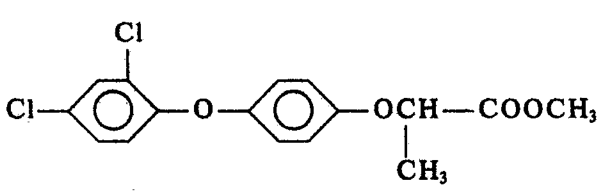

Diclofop-methyl
(vgl. DE-OS 2 223 894)

$A_1$ = 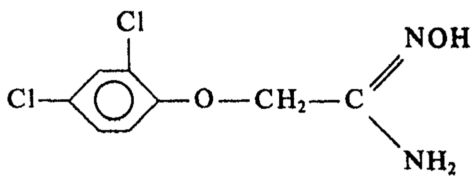

$A_2$ = 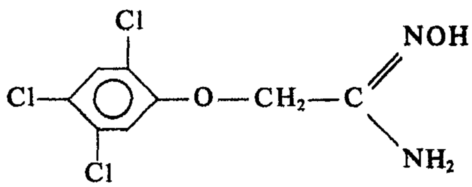

$A_3$ = 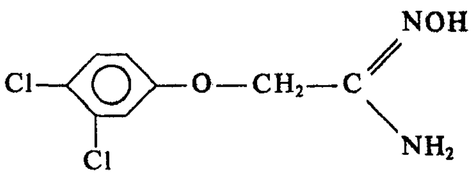

$A_4$ = 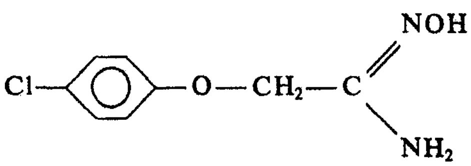

## Beispiel 2

Kultur- und Unkrautpflanzen wurden in Töpfen ausgesät und im Gewächshaus bis zum 3-Blatt-Stadium angezogen. Die Herbizid-Antidote wurden als wäßrige Suspensionen in den angegebenen Dosierungen auf die grünen Teile der Versuchspflanzen appliziert. Unmittelbar danach (nach dem Antrocknen der Spritzbrühe) erfolgte die Spritzung mit dem entsprechenden Testherbizid.

Nach einer Standzeit von ca. 3 Wochen im Gewächshaus wurde die Schädigung der Kulturpflanzen und Unkräuter optisch im Vergleich zu den unbehandelten Kontrollen bonitiert. Wie aus Tabelle 2 hervorgeht, wird Mais gegen die Schädigung durch herbizidwirksame Verbindungen (Agrarchemikalien) durch den Einsatz der Antidote wirkungsvoll geschützt.

Tabelle 2

| Verbindung | Dosis, kg AS/ha | % Schädigung | |
|---|---|---|---|
| | | Echinocloa crus-galli | Zea mays |
| $H_2$ | 0,25 | 100 | 85 |
| | 0,20 | 100 | 74 |
| | 0,15 | 100 | 16 |
| $A_5$ | 1,0 | 30 | 0 |
| $H_2 + A_5$ | 0,25 + 1,0 | 100 | 28 |
| | 0,20 + 1,0 | 100 | 24 |
| | 0,15 + 1,0 | 100 | 8 |

H = Herbizid

A = Antidot

$H_2$ = 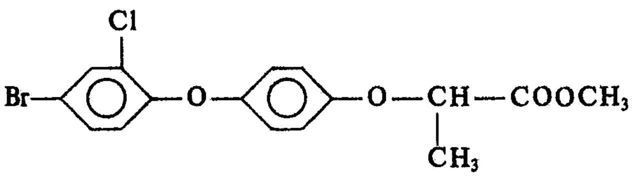 (vgl. DE-OS 2 601 548)

$A_5$ = 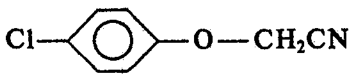

## Beispiel 3

Samen von Gerste (HD) und Flughafer (AVF) wurden in Töpfen in sandigem Lehm ausgesät und im Gewächshaus unter konstanten Bedingungen angezogen. Im 3—4-Blatt-Stadium wurden die Versuchspflanzen mit Diclofop-methyl ($H_1$), den erfindungsgemäßen Verbindungen alleine und Kombinationen (Tankmix) in konstantem Verhältnis von 4 : 1 ($H_1$ : A) in unterschiedlichen Aufwandmengen besprüht. Nach ca. 3 Wochen wurde der durch das Herbizid verursachte Schaden an den Kultur- und Unkrautpflanzen im Vergleich zur unbehandelten Kontrolle bonitiert (Angabe in Prozent). Die erfindungsgemäßen Substanzen selbst besitzen keinerlei herbizide Aktivität gegenüber Gerste und Flughafer. Werden sie jedoch mit dem Herbizid gemischt, so wird die Verträglichkeit des Herbizids gegen Kulturpflanzenschäden erheblich verbessert, während die Wirksamkeit gegen Flughafer nicht gemindert wird (s. Tabelle 3).

Tabelle 3

| Verbindungen | Dosis, kg AS/ha | % Schädigung Gerste | Flughafer |
|---|---|---|---|
| $H_1$ | 1,0 | 5 | 90 |
| | 2,0 | 13 | 90 |
| | 4,0 | 52 | 94 |
| $A_1$ | 2,0 | 0 | 0 |
| | 4,0 | 0 | 0 |
| $A_4$ | 2,0 | 0 | 0 |
| | 4,0 | 0 | 0 |
| $H_1 + A_1$ | 1,0 + 0,25 | 0 | 90 |
| | 2,0 + 0,5 | 4 | 90 |
| | 4,0 + 1,0 | 16 | 97 |
| $H_1 + A_4$ | 1,0 + 0,25 | 0 | 70 |
| | 2,0 + 0,5 | 2 | 85 |
| | 4,0 + 1,0 | 10 | 97 |

Beispiel 4

Samen von Zuckerrüben (BA), Mais (ZM) und Echinochloa crus-galli (ECG) wurden in Töpfen ausgelegt und mit einer dünnen Erdschicht abgedeckt. Der Wirkstoff N-(3-Methyl-1,2,4-oxidazol-5-ylmethyl)-chloressigsäure-2,6-dimethylanilid ($H_3$; vgl. DE-OS 2 842 284) und erfindungsgemäße Antidots wurden in Form wäßriger Emulsionen bzw. Suspensionen, die aus formulierten Emulsionskonzentraten bzw. Spritzpulvern bereitet worden waren, sowohl getrennt als auch zusammen in Mischung in unterschiedlichen Konzentrationen bzw. Mischungsverhältnissen auf die Bodenoberfläche appliziert. Nach der Behandlung wurden die Töpfe im Gewächshaus aufgestellt und bei optimalen Wachstumsbedingungen (18—23°C, gute Bewässerung) 3 Wochen stehengelassen. Danach wurde der Einfluß der Substanzen auf das Wachstum der Kultur- und Unkrautpflanzen optisch in Prozent bonitiert. Wie aus Tabelle 4 hervorgeht wird die Verträglichkeit des Herbizids durch einen Zusatz von erfindungsgemäßen Verbindungen sowohl bei monokotylen als auch bei dikotylen Kulturpflanzen stark verbessert, ohne die Unkrautwirkung des Vorauflaufherbizids zu beeinträchtigen.

Tabelle 4

| Verbindung | Dosis, kg AS/ha | % Schädigung BA | ZM | ECG |
|---|---|---|---|---|
| $H_3$ | 2,50 | 50 | — | 100 |
| | 1,25 | 25 | 74 | 100 |
| | 0,60 | 0 | 76 | 100 |
| | 0,30 | — | 45 | 100 |
| $A_1$ | 0,25 | 0 | — | 10 |
| | 0,125 | 0 | — | 10 |
| | 0,060 | 0 | — | 0 |
| $A_5$ | 2,50 | — | 17 | 78 |
| | 1,25 | — | 5 | 73 |
| | 0,60 | — | 0 | 58 |
| $H_3 + A_1$ | 2,50 + 0,06 | 15 | — | 100 |
| | 1,25 + 0,06 | 0 | — | 100 |
| | 0,60 + 0,06 | 0 | — | 100 |
| | 1,25 + 0,25 | 15 | — | 100 |
| | 1,25 + 0,125 | 8 | — | 100 |
| $H_3 + A_5$ | 1,25 + 0,6 | — | 7 | 100 |
| | 0,6 + 0,6 | — | 5 | 100 |
| | 0,3 + 0,6 | — | 0 | 100 |
| | 1,25 + 1,25 | — | 10 | 100 |
| | 0,6 + 1,25 | — | 10 | 100 |
| | 0,3 + 1,25 | — | 7 | 98 |

$H_3$ = 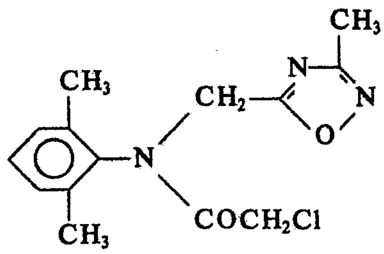 (vgl. DE-OS 2 842 284)

Beispiel 5

Unter Gewächshausbedingungen wurden Mais- (ZM) und Echinochloa-Pflanzen (ECG) in Töpfen im 3-Blatt-Stadium mit wäßrigen Emulsionen bzw. Suspensionen von Diclofop-methyl ($H_1$) und der erfindungsgemäßen Antidots alleine sowie mit Mischungen miteinander. Ca. 3 Wochen nach der Behandlung wurde die Schädigung der Kultur- und Unkrautpflanzen in Prozent bonitiert. Eine unbehandelte Kontrolle diente zum Vergleich.

Wie aus Tabelle 5 klar hervorgeht, heben die erfindungsgemäßen Verbindungen die Phytotoxizität von Illoxan® praktisch vollständig auf, ohne die Wirkung des Herbizids auf die Unkrautpflanzen zu mindern.

Tabelle 5

| Verbindung | Dosis, kg AS/ha | % Schädigung | |
|---|---|---|---|
| | | ZM | ECG |
| $H_1$ | 0,6 | 63 | 100 |
| | 0,3 | 50 | 100 |
| | 0,15 | 9 | 99 |
| $A_5$ | 2,0 | 5 | 33 |
| | 1,0 | 0 | 15 |
| | 0,5 | 0 | 5 |
| $H_1 + A_5$ | 0,3 + 2,0 | 0 | 100 |
| | 0,3 + 1,0 | 13 | 100 |
| | 0,3 + 0,5 | 3 | 100 |
| $H_1 + A_5$ | 0,6 + 2,0 | 0 | 100 |
| | 0,3 + 2,0 | 0 | 100 |
| | 0,15 + 2,0 | 0 | 97 |

**Patentansprüche**

1. Verwendung von Verbindungen der Formel I

$$Ar-X-C_nH_{2n}-R,$$

worin

Ar Phenyl, das ein- bis dreifach durch Chlor, Brom und/oder einfach durch Methyl substituiert sein

kann, oder Naphthyl;
X Sauerstoff oder Schwefel;
R $-CN$ oder $-C(NH_2)NOH$, sowie
n 1 oder 2

bedeuten, als phytotoxizitätsmindernde Zusätze zu Herbiziden vom Typ der Phenoxy-, Pyridyloxy-, Benzoxazolyloxy- und Benzthiazolyloxy-phenoxycarbonsäureester bzw. der Chloracetanilide oder der Dimedon-Derivate.

2. Verfahren zum Schutz von Kulturpflanzen gegen phytotoxische Nebenwirkungen von Pflanzenschutzmitteln vom Typ der Phenoxy-, Pyridyloxy-, Benzoxazolyloxy- und Benzthiazolyloxy-phenoxycarbonsäureester bzw. der Chloracetanilide oder der Dimedon-Derivate, dadurch gekennzeichnet, daß man die Pflanzen, Pflanzenteile oder Pflanzennährböden mit einer Verbindung der Formel I vor, nach oder gleichzeitig mit dem Pflanzenschutzmittel behandelt.

3. Verfahren gemäß Anspruch 2, dadurch gekennzeichnet, daß in Formel I

Ar = Phenyl, das ein- bis dreifach durch Chlor substituiert ist,
X = Sauerstoff,
R = CN und
n = 1

bedeuten.

4. Verfahren gemäß Ansprüchen 2 und 3, dadurch gekennzeichnet, daß die Verbindung der Formel I, 3,4-Dichlorphenoxyacetonitril ist.

5. Verfahren gemäß Ansprüchen 2 bis 4, dadurch gekennzeichnet, daß das Mischungsverhältnis von Herbizid zu den Verbindungen der Formel I im Bereich zwischen 1 : 0,01 und 1 : 10 liegt.

6. Verwendung von Verbindungen der Formel I von Anspruch 1, worin

Ar = Phenyl, das ein- bis dreifach durch Chlor substituiert ist,
X = Sauerstoff,
R = CN und
n = 1

bedeutet.

7. Verwendung von Verbindungen der Formel I gemäß Ansprüchen 1 und 6, dadurch gekennzeichnet, daß das Mischungsverhältnis Herbizid zur Verbindung der Formel I im Bereich zwischen 1 : 0,01 und 1 : 10 liegt.

## Claims

1. The use of compounds of the formula I

$$Ar-X-C_nH_{2n}-R$$

in which

Ar is phenyl which may be mono- to trisubstitute with chlorine, bromine and/or monosubstituted with methyl, or is naphthyl;
X is oxygen or sulfur;
R is $-CN$ or $-C(NH_2)NOH$, and
n is 1 or 2

as phytotoxic side effects reducing additives to herbicides of the type of phenoxy-, pyridyloxy-, benzoxazolyloxy- and benzothiazolyloxy-phenoxycarboxylic acid esters and of chloroacetanilides respectively or of dimedon derivatives.

2. A process for protecting crop plants against phytotoxic side effects of pesticides of the type of phenoxy-, pyridyloxy-, benzoxazolyloxy- and benzothiazolyloxy-phenoxycarboxylic acid esters and of chloroacetanilides respectively or of dimedon derivatives in which the plants, plant parts or the solid on which they grow are treated with a compound of the formula I before, after, or simultaneously with the pesticide.

3. The process as claimed in claim 2, in which in formula I

Ar is phenyl having from 1 to 3 chloro substituents,
X is oxygen,
R is CN and
n is 1.

4. The process as claimed in claims 2 and 3, in which the compound of formula I is 3,4-dichlorophenoxy-acetonitrile.

5. The process as claimed in claims 2 to 4, wherein the mixing ration of herbicide to the compounds of formula I is in a range of from 1 : 0,01 to 1 : 10.

6. The use of compounds of formula I of claim 1, wherein

Ar is phenyl having from 1 to 3 chloro substituents,
X is oxygen,
R is CN and
n is 1.

7. The use of compounds of formula I as claimed in claims 1 and 6, wherein the mixing ratio of herbicide to the compounds of formula I is in a range of from 1 : 0,01 to 1 : 10.

**Revendications**

1. Application de composés répondant à la formule I:

$$Ar-X-C_nH_{2n}-R \qquad (I)$$

dans laquelle:

Ar représente un radical phényle éventullement porteur d'un à trois substituants pris dans l'ensemble constitué par le chlore et le brome et/ou d'un seul substituant qui est alors un méthyle, ou encore représente un radical naphtyle,
X représente l'oxygène ou le soufre,
R représente $-CN$ ou $-C(NH_2)NOH$, et
n est égal à 1 ou à 2.

Comme produits abaisseurs de phytotoxicité à ajouter à des herbicides du type des esters d'acides phénoxy-, pyridyloxy-,benzoxazolyloxy- et benzothiazolyloxy-phénoxy-carboxyliques, des chloracétanilides ou des dérivés du dimédon.

2. Procédé pour protéger des plantes cultivées contre les effets secondaires phytotoxiques de produits phytosanitaires, du type des esters d'acides phénoxy-, pyridyloxy, benzoxazolyloxy- et benzothiazolyloxy-phénoxy-carboxyliques, des chloracétanilides ou des dérivés du dimédon, procédé caractérisé en ce qu'on traite les plantes, des parties de plantes ou des milieux nutritifs pour plantes par un composé de formule I, avant, après ou en même temps que par le produit phytosanitaire.

3. Procédé selon la revendication 2, caractérisé en ce que, dans la formule I:

Ar représente un radical phényle portant de 1 à 3 atomes de chlore,
X représente l'oxygène,
R représente $-CN$ et
n est égal à 1.

4. Procédé selon l'une des revendications 2 et 3, caractérisé en ce que le composé de formule I est le dichloro-3,4 phénoxy-acétonitrile.

5. Procédé selon l'une quelconque des revendications 2 à 4, caractérisé en ce que le rapport entre la quantité de l'herbizide et la quantité du composé de formule I dans le mélange est compris entre 1 : 0,01 et 1 : 10.

6. Application de composés de formule I selon la revendication 1 dans laquelle:

Ar représente un radical phényle qui porte de 1 à 3 atomes de chlore,
X représente l'oxygène,
R représente $-CN$ et
n est égal à 1.

7. Application de composés de formule I selon l'une des revendications 1 et 6, caractérisée en ce que le rapport entre la quantité de l'herbicide et la quantité du composé de formule I dans le mélange est compris entre 1 : 0,01 et 1 : 10.